# EUROPÄISCHE PATENTANMELDUNG

(11) **EP 0 523 684 A1**
(43) Veröffentlichungstag der Anmeldung: **20.01.1993**
(21) Anmeldenummer: 92112128.1
(22) Anmeldetag: 16.07.1992
(51) Int. Cl.: F26B 23/00, F26B 25/00

(54) **Verfahren und Vorrichtung zur Rückgewinnung von Wärme aus Trocknungs- oder Abluftreinigungsanlagen**

(30) Priorität: 16.07.1991 DE 4123556
(71) Anmelder: FRITZ EGGER GESELLSCHAFT m.b.H., A-6380 St. Johann i.T. (AT)
(72) Erfinder: Böhler, Harald, A-6800 Feldkirch (AT)
(74) Vertreter: Sandmann, Joachim, Dr.

(57) **Zusammenfassung**

Aus der Abluft eines Holzspantrockners wird Wärme mittels eines Wärmetransportkreises 1 zurückgewonnen, der einen die Abluft kühlenden Wärmetauscher 4 und einen Verbrauchswärmetauscher 6, der einem Vortrockner für Holzspäne zugeordnet ist, sowie wenigstens eine Wärmepumpe 10 aufweist, deren Heizkreistauscher 11 den zum Verbrauchswärmetauscher 6 strömenden Wärmeträger nacherwärmt und dadurch auf ein höheres Temperaturniveau bringt.

Die gegebenenfalls mittels einer Regeleinrichtung in ihrer Leistung steuerbare Wärmepumpe 10 überträgt einen Teil der Wärme, die der Abluft entzogen wird, und kann an eine den Verbrauchswärmetauscher 6 umgehende Umgehungsleitung 9 des Wärmetransportkreises 1 angeschlossen sein, so daß der Wärmetauscher 4 den Kühlkreistauscher der Wärmepumpe 10 bildet. Die Wärmepumpe 10 kann aber beispielsweise auch einen eigenen Kühlkreistauscher aufweisen, der dem vom Verbraucher zum Wärmetauscher zurückströmenden Wärmeträger Wärme entzieht.

## Beschreibung

Die Erfindung bezieht sich auf ein Verfahren zur Rückgewinnung von Wärme, insbesondere Kondensationswärme, aus mit Wasserdampf beladener Abluft aus Trocknungs- oder Abluftreinigungsanlagen, bei dem die Abluft durch einen Wärmetauscher geleitet und gekühlt wird, durch den in einem Wärmetransportkreis ein Wärmeträger umgewälzt und dadurch Wärme vom Wärmetauscher zu einem Wärmeverbraucher transportiert wird.

Ein solches Verfahren ist aus der EP-A 385 372 bekannt. Dort handelt es sich um eine Anlage zum Trocknen von Holzspänen oder Holzfasern, bei dem die in einem Zyklonabscheider von den getrockneten Spänen getrennte Abluft, welche die in direktem Materialkontakt durch den Trockner geleiteten und dort mit Wasserdampf und Holzverunreinigungen beladenen Verbrennungsgase enthält, in einem Gegenstromwäscher gewaschen wird. Die Waschflüssigkeit wird durch einen Zwischenkreis vom Wäschersumpf zu den Wäscherdüsen umgewälzt, wobei ein Wärmetauscher diesen Zwischenkreis mit einem Wärmetransportkreis koppelt, der die rückgewonnene Wärme bzw. Wärmeenergie einem Verbraucher zuführt, bei dem es sich bevorzugt um einen Vortrockner für die Holzspäne handelt. Mit der Abwärme kann aber beispielsweise auch Luft erhitzt werden, die der gewaschenen Abluft beigemischt oder als Verbrennungsluft eingesetzt wird.

Bei einem solchen Holzspänetrockner werden große Wassermengen verdampft. Damit steckt in der Abluft ein großes Energiepotential, dessen Rückgewinnung bzw. Nutzung jedoch dadurch eingeschränkt wird, daß die Wärme in einem vergleichsweise niedrigen Temperaturbereich anfällt. Die mit Wasserdampf beladene Abluft des Holzspänetrockners weist beispielsweise Taupunkttemperaturen im Bereich von ca. 65 bis 70^{o} c auf. Bei diesem niedrigen Temperaturniveau ist die Abwärmenutzung mit einem verhältnismäßig hohen apparativen Aufwand (große Wärmetauscher) und einem entsprechenden Platzbedarf verbunden. Daher ist eine Erhöhung des Temperaturniveaus der anfallenden Abwärme häufig eine Vorbedingung für die Wirtschaftlichkeit der Wärmerückgewinnung. Das gilt nicht nur für die Wärmerückgewinnung bei Trocknungsanlagen für Holzspäne sondern allgemein für die Rückgewinnung von Abluftwärme sowie für fast alle Arten der Abwärmenutzung, so beispielsweise auch für die Einspeisung von Abwärme in Fernwärmenetze.

Bekanntlich eignen sich Wärmepumpen dafür, Wärmeenergie von niedrigem Temperaturniveau auf ein höheres Temperaturniveau zu bringen. Für die Wirtschaftlichkeit einer solchen Maßnahme ist die Leistungszahl der Wärmepumpe von maßgeblicher Bedeutung. Diese bezeichnet das Verhältnis der von der Wärmepumpe benötigten Antriebsenergie zu der von der Wärmepumpe abgegebenen Wärmemenge. Die Leistungszahl wird von der Temperaturspreizung zwischen dem Heizkreis und dem Kühlkreis der Wärmepumpe beeinflußt, wobei eine größere Temperaturspreizung mit einer geringeren Leistungszahl verbunden ist. Zu berücksichtigen ist, daß mit einer größeren Leistung der Wärmepumpe ihr Platzbedarf sowie die Anschaffungs- und Betriebskosten ansteigen. Die Entwicklung von Hochtemperatur-Wärmepumpen mit Heizkreistemperaturen bis über 100^{o} C ist noch im Gange, wobei nach verschiedenen Prinzipien arbeitende Wärmepumpen nach den jeweiligen Ausgangsbedingungen der Abwärmenutzung eingesetzt werden können.

Es ist bereits bekannt, bei einer Holzspantrocknungsanlage mit im Gegenstrom gewaschener Abluft eine Wärmepumpe einzusetzen, die der umgewälzten Waschflüssigkeit Wärmeenergie entzieht und auf ein höheres Temperaturniveau bringt, um vom gewaschenen Abgas abgezweigtes Rückgas zu erwärmen, das zur Brennkammer zurückströmt (DE-OS 28 00 238). Hierbei wird der umgewälzten Waschflüssigkeit Wärme nur durch den Kühlkreistauscher der Wärmepumpe entzogen, wobei die gesamte genutzte Abwärme durch die Wärmepumpe übertragen wird, deren Heizkreistauscher vom zu erwärmenden Rückgas durchströmt wird. Die Belastung der Wärmepumpe mit der gesamten zu nutzenden Abwärme führt dazu, daß die Wärmepumpe vergleichsweise groß ausgelegt werden muß und nicht mit der gewünschten hohen Wirtschaftlichkeit arbeitet.

Der Erfindung liegt die Aufgabe zugrunde, die Wirtschaftlichkeit der bisherigen Wärmerückgewinnung zu verbessern und dadurch die Umweltbelastung zu senken.

Diese Aufgabe wird erfindungsgemäß dadurch gelöst, daß die Temperatur des Wärmeträgers hinter dem Wärmetauscher und vor dem Wärmeverbraucher mittels wenigstens einer Wärmepumpe erhöht wird, mit der eine der Abluft entzogene Wärmemenge übertragen wird, die kleiner als die dem Wärmeverbraucher zugeführte Wärmemenge ist.

Die erfindungsgemäße Wärmerückgewinnung basiert also auf einer Kombination (wenigstens) eines Wärmetauschers und (wenigstens) einer Wärmepumpe, bei der der Wärmetauscher die gesamte rückgewonnene Wärme aufnimmt, die Wärmepumpe aber nur einen Teil der Abwärme aufnimmt, um damit die dem Verbraucher zugeführte Wärmeenergie auf ein erhöhtes Temperaturniveau nachzuerwärmen. Dabei stammt die vom Kühlkreis der Wärmepumpe aufgenommene Wärmeenergie zweckmäßigerweise aus dem Wärmetransportkreis, beispielsweise aus dem vom Wärmeverbraucher zum Wärmetauscher zurückströmenden Wärmeträger des Wärmetransportkreises oder aus einem den Verbraucher umgehenden Teilstrom des Wärmetransportkreises. In beiden Fällen kann die lediglich zur Nacherwärmung eines die Wärmepumpe umgehenden Wärmestroms zum Verbraucher dienende Wärmepumpe vergleichsweise klein ausgelegt und wirtschaftlich betrieben werden, wobei trotzdem dem Verbraucher Abwärme auf einem vergleichsweise hohen Temperaturniveau zur Verfügung gestellt wird. Auf Grund dieser Gegebenheiten wird die Abwärmenutzung auch in solchen Fällen interessant, in denen bisher aus wirtschaftlichen Erwägungen auf eine Wärmerückgewinnung verzichtet wurde.

Ein weiterer Vorteil der Erfindung liegt darin, daß selbst bei vollständigem Ausfall der Wärmepumpe bzw. ihrer Wartung oder Reparatur die Abwärme genutzt werden kann, wenn auch in eingeschränktem Maße. Ferner führt die Anwendung der Wärmepumpe zu einer erhöhten Abkühlung des zum Wärmetauscher zurückströmenden Wärmeträgers, was die Temperaturdifferenz im Wärmetauscher erhöht und damit zu einer Steigerung der Wärmerückgewinnung führt. Mit der stärkeren Abkühlung der Abluft verstärkt sich zugleich die Kondensation von Schadstoffen aus der Abluft, wodurch letztlich die Emmissionen herabgesetzt werden.

Für den Fachmann ist leicht zu erkennen, daß es vorteilhaft sein kann, wenn für den Wärmeentzug mehrere Wärmetauscher eingesetzt werden, die parallel und/oder hintereinander geschaltet sind. Dies gilt insbesondere dann, wenn mehrere Abwärmequellen genutzt werden. Ebenso kann es sinnvoll sein, mehrere parallel und/oder hintereinander geschaltete Wärmepumpen einzusetzen. Dies kann vorteilhaft sein bei Berücksichtigung der auf dem Markt angebotenen Wärmepumpen mit unterschiedlichen Leistungen, aber auch aus Gründen der Betriebssicherheit oder zur besseren Anpassung an ein unterschiedliches Angebot von Abwärme bzw. an einen unterschiedlichen Wärmeverbraucherbedarf. Insbesondere kann auch die Verwendung von nach verschiedenen Prizipien arbeitenden Wärmepumpen sinnvoll sein, um unter Ausnutzung der besonderen Merkmale der jeweiligen Wärmepumpe eine bestmögliche Wirtschaftlichkeit zu erreichen. So kann die Kombination von Dampfstrahlwärmepumpen mit Absorptions-Kompressorwärmepumpen dann besonders vorteilhaft sein, wenn Wärmeträgertemperaturen im Bereich von 100^{o} C und darüber erforderlich sind oder wenn zwei oder mehr Wärmetransportkreise mit unterschiedlichen Temperaturen angespeist werden sollen. Bei derartigen Konzepten sind die jeweiligen Standortbedingungen zu berücksichtigen, wozu auch das Platzangebot, die technische Schulung des Bedienungspersonals, die Energiekosten, die Nutzungsdauer, das Wärmeangebot und das Nutzungspotential für die Abwärme gehören.

Versuche haben Berechnungen bestätigt, nach denen durch die erfindungsgemäße Kombination von Wärmetauschern und Wärmepumpen zur Rückgewinnung von Abwärme, die zum Vortrocknen genutzt wird, der Energieeinsatz für die Trocknung von Holzspänen um über 30 % reduziert werden kann, wobei sich gleichzeitig eine deutliche Herabsetzung der durch den Trocknungsvorgang hervorgerufenen Emissionen ergibt. Dabei wurde eine Temperaturerhöhung des Wärmeträgers im Wärmetransportkreis erzielt, die auch eine anderweitige Nutzung der Abwärme wirtschaftlich interessant erscheinen läßt, beispielsweise für eine Hallenheizung oder für die Einleitung in Fernwärmenetze.

In der Praxis ist es meist so, daß das Wärmeangebot des Abluftstroms nicht konstant ist, sondern Schwankungen aufweist. Ebenfalls wird die Abwärmenutzung häufig Schwankungen aufweisen, das heißt, daß der Wärmeentzug durch den Wärmeverbraucher aus dem Wärmetransportkreis variabel ist. Ferner kann es notwendig sein, daß die Temperatur des abströmenden Abluftstroms auf einem bestimmten Wert oder in einem bestimmten Bereich gehalten wird, z.B. erforderlich für eine nachfolgende Abluftbehandlung oder für die Sicherung eines thermischen Auftriebs, in letzterem Falle evtl. sogar mit einer der Außenlufttemperatur nachgeführten Mindestaustrittstemperatur des aus einem Kamin austretenden Abluftstroms.

In all diesen Fällen können die Vorteile des erfindungsgemäßen Verfahrens dadurch weiter gesteigert werden, daß die Leistung der Wärmepumpe und/oder die von der Wärmepumpe im Wärmetransportkreis bewirkte Temperaturerhöhung diesen schwankenden Betriebsbedingungen angepaßt wird. Bei mehreren Wärmeverbrauchern mit unterschiedlichem Wärmebedarf kann eine solche Regelaufgabe besonders vorteilhaft durch den Einsatz mehrerer Wärmepumpen gelöst werden, wobei es häufig genügt, wenn nur eine der Wärmepumpen geregelt betrieben wird. Daneben sind andere Möglichkeiten realisierbar, um bei einer Versorgung von mehreren Wärmeverbrauchern bei unterschiedlichem Wärmeangebot im Abluftstrom oder unterschiedlichem Wärmebedarf in den Wärmeverbrauchern eine unter Berücksichtigung technischer und/oder wirtschaftlicher Gesichtspunkte optimale Wärmerückgewinnung zu erreichen.

Die Erfindung bezieht sich auch auf eine der Durchführung des vorgenannten Verfahrens dienende Vorrichtung mit einer Wärmetransportkreislaufleitung, einer in die Kreislaufleitung eingebauten Umwälzpumpe, einem Wärmetauscher, dessen Kühlpfad zur Kühlung der Abluft vorgesehen und dessen Heizpfad in der Kreislaufleitung angeordnet ist, und einem an die Kreislaufleitung angeschlossenem Wärmeverbraucher. Eine derartige Vorrichtung ist ebenfalls aus der EP-A 385 372 bekannt.

Diese Vorrichtung ist erfindungsgemäß dadurch gekennzeichnet, daß der Kreislaufleitung wenigstens eine Wärmepumpe zugeordnet ist, deren Heizkreistauscher in den Kreislaufleitungsabschnitt vom Wärmetauscher zum Wärmeverbraucher und deren Kühlkreistauscher in einen Abluftwärme transportierenden Leitungsabschnitt eingebaut ist. Auf Grund dieser Ausbildung eignet sich die Vorrichtung für die Durchführung des erfindungsgemäßen Verfahrens und damit zur Erzielung der vorstehend beschriebenen Vorteile.

Zweckmäßige Ausgestaltungen sowohl des Verfahrens wie der Vorrichtung nach der Erfindung ergeben sich aus den Unteransprüchen.

Mehrere Ausführungsbeispiele der Erfindung werden nachfolgend anhand von schematischen Zeichnungen näher erläutert. Es zeigen:
- Fig. 1: einen Wärmetransportkreis mit einem von der Abluft durchströmten Wärmetauscher und einer Wärmepumpe, die einem den Wärmeverbraucher umgehenden Teilstrom des Wärmetransportkreises Wärme entzieht;
- Fig. 2: einen Figur 1 entsprechenden Wärmetransportkreis, wobei jedoch der Wärmetauscher über einen Zwischenkreis mit einem Gegenstromwäscher die Abluft kühlt;
- Fig. 3: einen Wärmetransportkreis mit einem von der Abluft durchströmten Wärmetauscher und einer Wärmepumpe, die dem vom Wärmeverbraucher zum Wärmetauscher zurückströmenden Wärmeträger im Wärmetransportkreis Wärme entzieht; und
- Fig. 4: einen der Figur 3 entsprechenden Wärmetransportkreis, bei dem jedoch der Wärmetauscher über einen Zwischenkreis mit einem Gegenstromwäscher die Abluft kühlt.

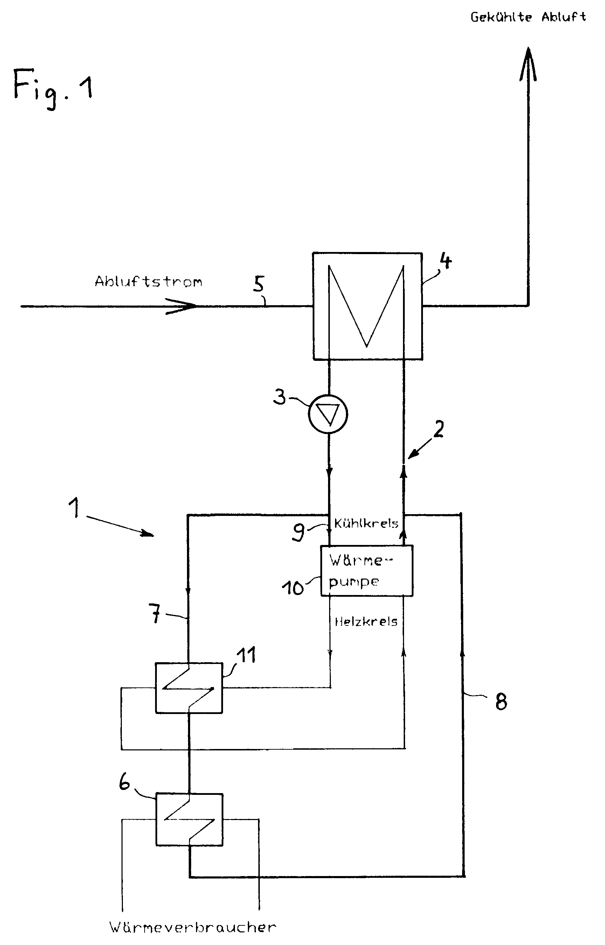

Gemäß Figur 1 ist ein Wärmetransportkreis 1 vorgesehen, der eine Kreislaufleitung 2 mit einer Umwälzpumpe 3 für den im Wärmetransportkreis 1 zirkulierenden Wärmeträger aufweist. In den Wärmetransportkreis 1 ist der Heizpfad eines Wärmetauschers 4 eingebaut, dessen Kühlpfad in die Abluftleitung 5 eingebaut ist, so daß die Abluft gekühlt und dabei nutzbare Wärme zurückgewonnen wird.

In den Wärmetransportkreis 1 ist ferner ein Verbrauchswärmetauscher 6 eingebaut, der einem Wärmeverbraucher zugeordnet ist, beispielsweise einem Vortrockner für Holzspäne. Auf diese Weise ist die Kreislaufleitung 2 in einen Kreislaufleitungsabschnitt 7 vom Wärmetauscher 4 zum Wärmeverbraucher und in einen Kreislaufleitungsabschnitt 8 vom Wärmeverbraucher zum Wärmetauscher (4) unterteilt.

Vom Kreislaufleitungsabschnitt 7 zweigt eine Umgehungsleitung 9 ab, die unter Umgehung des Wärmeverbrauchers bzw. des Verbrauchswärmetauschers 6 in den Kreislaufleitungsabschnitt 8 einmündet. In diese Umgehungsleitung 9 ist eine Wärmepumpe 10 eingebaut, die dem durch die Umgehungsleitung 9 strömenden Wärmeträger Wärme entzieht, so daß der Kühlkreistauscher der Wärmepumpe 10 vom Wärmetauscher 4 gebildet ist. Der Heizkreistauscher 11 der Wärmepumpe 10 ist in den Kreislaufleitungsabschnitt 7 hinter dem Abzweigpunkt der Umgehungsleitung 9 eingebaut und bewirkt somit eine Nacherwärmung bzw. Temperaturerhöhung des zum Verbrauchswärmetauscher 6 strömenden Wärmeträgers.

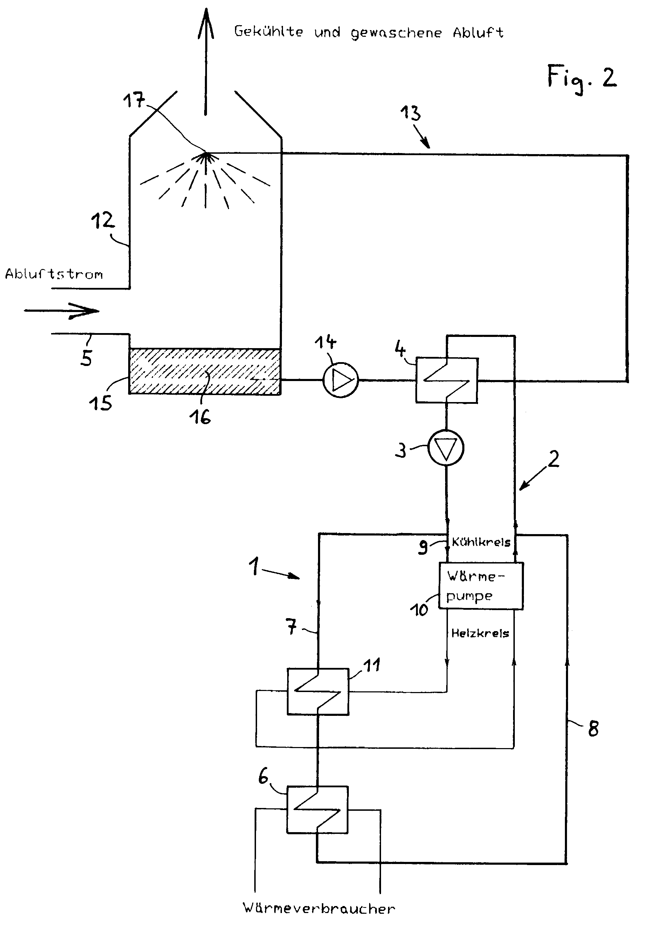

Die Anlage nach Figur 2 stimmt hinsichtlich des Wärmetransportkreises und der zugehörigen Aggregate mit der Ausbildung nach Figur 1 überein, so daß insoweit dieselben Bezugszeichen eingetragen sind und von einer erneuten Beschreibung abgesehen wird.

Der Unterschied liegt darin, daß die Abluftleitung 5 nicht durch den Wärmetauscher 4 führt sondern durch einen Gegenstromwäscher 12 geleitet und dabei gekühlt sowie gewaschen wird. Dieser Gegenstromwäscher 12 ist mit dem Wärmetauscher 4 durch einen Zwischenkreis 13 verbunden, wobei mittels einer Umwälzpumpe 14 dem Sumpf 15 des Gegenstromwäschers 12 entnommene warme Waschflüssigkeit 16 durch den Kühlpfad des Wärmetauschers 4 geleitet und den Sprühdüsen 17 des Gegenstromwäschers 12 zugeführt wird. Der Gegenstromwäscher 12 ist vereinfacht ohne Einrichtungen für die Zudosierung frischer Waschflüssigkeit und den Ablauf von durch Kondensat und Verunreinigungen verdünnter bzw. verbrauchter Waschflüssigkeit dargestellt.

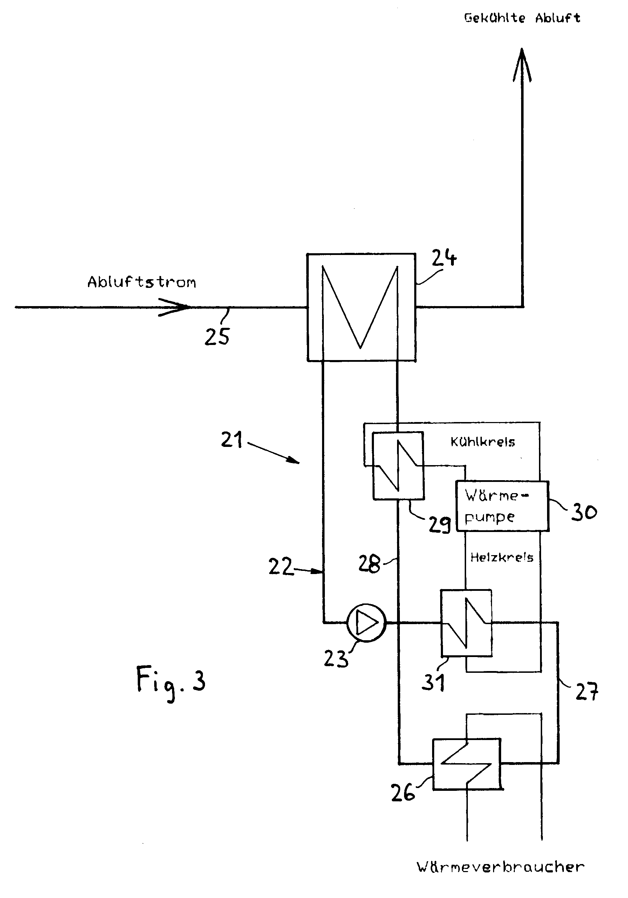

Die Anlage gemäß Figur 3 weist der Anlage gemäß Figur 1 entsprechende Aggregate und Ausbildungsmerkmale auf, nämlich einen Wärmetransportkreis 21 mit einer Kreislaufleitung 22 und einer Umwälzpumpe 23, einen Wärmetauscher 24, eine Abluftleitung 25, einen Verbrauchswärmetauscher 26, Kreislaufleitungsabschnitte 27 und 28 sowie eine Wärmepumpe 30.

Im Unterschied zu Figur 1 fehlt eine Umgehungsleitung im Wärmetransportkreis 21, und die Wärmepumpe 30, die mit ihrem Heizkreistauscher 31 wiederum in den Kreislaufleitungsabschnitt 27 eingebaut ist und somit den zum Verbrauchswärmetauscher 26 strömenden Wärmeträger nacherwärmt bzw. auf ein höheres Temperaturniveau bringt, ist nicht an den Wärmetauscher 24 angeschlossen sondern mit einem von diesem getrennten Kühlkreistauscher 29 versehen, der in den vom Verbrauchswärmetauscher 26 zum Wärmetauscher 24 führenden Kreislaufleitungsabschnitt 28 eingebaut ist. Somit entzieht die Wärmepumpe 30 dem bereits im Verbrauchswärmetauscher 26 herabgekühlten zirkulierenden Wärmeträger weitere Wärme.

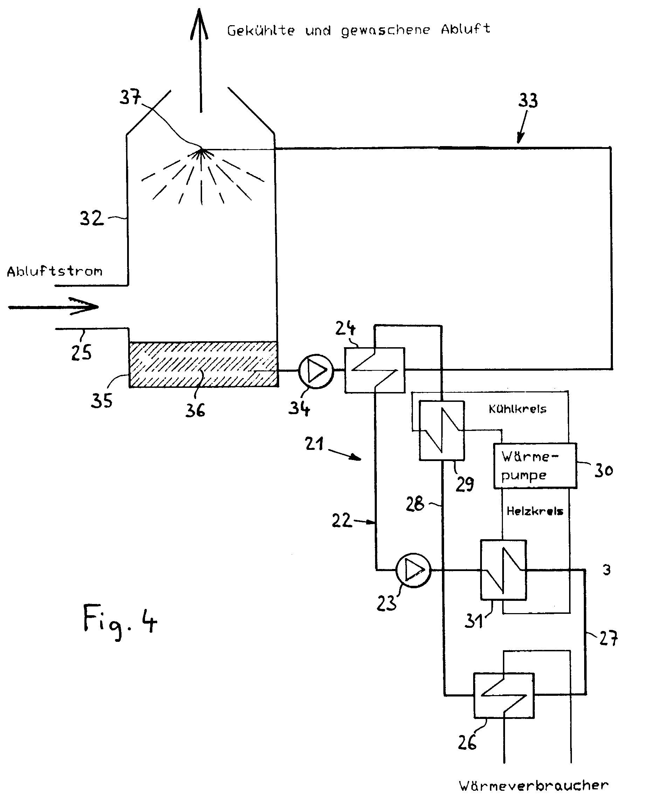

Die Anlage nach Figur 4 stimmt hinsichtlich des Wärmetransportkreises und der zugehörigen Aggregate mit der Ausbildung nach Figur 3 überein, so daß insoweit dieselben Bezugszeichen eingetragen sind und von einer erneuten Beschreibung abgesehen wird.

Der Unterschied zur Anlage in Figur 3 liegt darin, daß die Abluftleitung 25 nicht durch den Wärmetauscher 24 führt sondern durch einen Gegenstromwäscher 32 geleitet und dabei gekühlt sowie gewaschen wird. Dieser Gegenstromwäscher 32 ist mit dem Wärmetauscher 24 durch einen Zwischenkreis 33 verbunden, wobei mittels einer Umwälzpumpe 34 dem Sumpf 35 des Gegenstromwäschers 32 entnommene warme Waschflüssigkeit 36 durch den Kühlpfad des Wärmetauschers 24 geleitet und den Sprühdüsen 37 des Gegenstromwäschers 32 zugeführt wird. Der Gegenstromwäscher 32 ist wiederum vereinfacht ohne Einrichtungen für die Zudosierung frischer Waschflüssigkeit und den Ablauf von durch Kondensat und Verunreinigungen verdünnter bzw. verbrauchter Waschflüssigkeit dargestellt.

## Patentansprüche

1. Verfahren zur Rückgewinnung von Wärme, insbesondere Kondensationswärme, aus mit Wasserdampf beladener Abluft aus Trocknungs- oder Abluftreinigungsanlagen, bei dem die Abluft durch einen Wärmetauscher (4, 24) geleitet und gekühlt wird, durch den in einem Wärmetransportkreis (1, 21) ein Wärmeträger umgewälzt und dadurch Wärme vom Wärmetauscher (4, 24) zu einem Wärmeverbraucher (6, 26) transportiert wird, **dadurch gekennzeichnet**, daß die Temperatur des Wärmeträgers hinter dem Wärmetauscher (4, 24) und vor dem Wärmeverbraucher (6, 26) mittels wenigstens einer Wärmepumpe (10, 30) erhöht wird, mit der eine der Abluft entzogene Wärmemenge übertragen wird, die kleiner als die dem Wärmeverbraucher (6, 26) zugeführte Wärmemenge ist.

2. Verfahren nach Anspruch 1, **dadurch gekennzeichnet**, daß mittels der Wärmepumpe (30) dem vom Wärmeverbraucher (26) zum Wärmetauscher (24) zurückströmenden Wärmeträger Wärme entzogen wird.

3. Verfahren nach Anspruch 1, **dadurch gekennzeichnet**, daß der Wärmeträger hinter dem Wärmetauscher (4) in einen dem Wärmeverbraucher (6) zugeführten Teilstrom, dessen Temperatur mittels der Wärmepumpe (10) erhöht wird, und in einen den Wärmeverbraucher (6) umgehenden Teilstrom aufgeteilt wird, dem mittels der Wärmepumpe (10) Wärme entzogen wird.

4. Verfahren nach einem der Ansprüche 1 bis 3, **dadurch gekennzeichnet**, daß die Abluft mittelbar durch den Wärmetauscher (4,24) gekühlt wird, der durch zumindest einen Zwischenkreis (13, 33) mit einem von der Abluft durchströmten Wärmeaustauscher (12, 32) verbunden ist.

5. Verfahren nach Anspruch 4, **dadurch gekennzeichnet**, daß die Abluft im von ihr durchströmten Wärmeaustauscher (12, 32) gewaschen wird und die dabei erwärmte Waschflüssigkeit (16, 36) durch den Zwischenkreis (13, 33) umgewälzt wird.

6. Verfahren nach Anspruch 5, **dadurch gekennzeichnet**, daß die Abluft im Gegenstrom gewaschen wird.

7. Verfahren nach einem der Ansprüche 1 bis 6, **dadurch gekennzeichnet,** daß die durch die Wärmepumpe (10, 30) bewirkte Temperaturerhöhung des Wärmeträgers im Wärmetransportkreis (1, 21) in Abhängigkeit vom Wärmeangebot der Abluft bzw. der Waschflüssigkeit (16, 36) und/oder von der Wärmeabfuhr durch den Wärmeverbraucher (6, 26) geregelt wird.

8. Verfahren nach einem der Ansprüche 1 bis 6, **dadurch gekennzeichnet,** daß die durch die Wärmepumpe (10, 30) in den Wärmetransportkreis (1, 21) eingebrachte Wärmemenge in Abhängigkeit vom Wärmeangebot der Abluft bzw. der Waschflüssigkeit (16, 36) und/oder von der Wärmeabfuhr durch den Wärmeverbraucher (6, 26) geregelt wird.

9. Verfahren nach einem der Ansprüche 1 bis 6, **dadurch gekennzeichnet,** daß die durch die Wärmepumpe (10, 30) in den Wärmetransportkreis (1, 21) eingebrachte Wärmemenge in Abhängigkeit von der Temperatur der durch die Wärmerückgewinnung abgekühlten Abluft geregelt wird.

10. Vorrichtung zur Durchführung des Verfahrens nach Anspruch 1 mit einer Wärmetransport-Kreislaufleitung (2, 22), einer in die Kreislaufleitung (2, 22) eingebauten Umwälzpumpe (3, 23), einem Wärmetauscher (4, 24), dessen Kühlpfad zur Kühlung der Abluft vorgesehen und dessen Heizpfad in der Kreislaufleitung (2, 22) angeordnet ist, und einem an die Kreislaufleitung (2, 22) angeschlossenen Wärmeverbraucher (6, 26), **dadurch gekennzeichnet**, daß der Kreislaufleitung (2, 22) wenigstens eine Wärmepumpe (10, 30) zugeordnet ist, deren Heizkreistauscher (11, 31) in den Kreislaufleitungsabschnitt (7, 27) vom Wärmetauscher (4, 24) zum Wärmeverbraucher (6, 26) und deren Kühlkreistauscher (4, 29) in einen Abluftwärme tranportierenden Leitungsabschnitt (5, 13, 28) eingebaut ist.

11. Vorrichtung nach Anspruch 10, **dadurch gekennzeichnet**, daß der Kühlkreistauscher (29) der Wärmepumpe (30) in den Kreislaufleitungsabschnitt (28) vom Wärmeverbraucher (26) zum Wärmetauscher (24) eingebaut ist.

12. Vorrichtung nach Anspruch 10, **dadurch gekennzeichnet**, daß die Wärmepumpe (10) kühlkreisseitig in eine Umgehungsleitung (9) eingebaut ist, die unter Umgehung des Wärmeverbrauchers (6) vom Kreislaufleitungsabschnitt (7) vom Wärmetauscher (4) zum Wärmeverbraucher (6) abzweigt und in den Kreislaufleitungsabschnitt (8) vom Wärmeverbraucher (6) zum Wärmetauscher (4) einmündet, so daß der Wärmetauscher (4) auch der Kühlkreistauscher der Wärmepumpe (10) ist.

13. Vorrichtung nach einem der Ansprüche 10 bis 12, **dadurch gekennzeichnet**, daß der Wärmeverbraucher über einen Verbrauchswärmetauscher (6, 26) an die Kreislaufleitung (2, 22) angeschlossen ist.

14. Vorrichtung nach einem der Ansprüche 10 bis 13, **dadurch gekennzeichnet**, daß der Kühlpfad des Wärmetauschers (4, 24) in einer einen Zwischenkreis (13, 33) bildenden Umwälzleitung für Waschflüssigkeit (16, 36) liegt, die an einen Wäscher (12, 32) für die Abluft angeschlossen ist.

15. Vorrichtung nach Anspruch 14, **dadurch gekennzeichnet**, daß der Wäscher (12, 32) ein Gegenstromwäscher ist.

16. Vorrichtung nach einem der Ansprüche 10 bis 15, **dadurch gekennzeichnet,** daß die Wärmepumpe (10, 30) mit veränderbarer Leistung betreibbar und durch eine Regeleinrichtung in Abhängigkeit vom Wärmeangebot der Abluft und/oder von der Wärmeabfuhr durch den Wärmeverbraucher (6, 26) und/oder von der Temperatur der durch die Wärmerückgewinnung abgekühlten Abluft gesteuert ist.
